Europäisches Patentamt

(19) European Patent Office

Office européen des brevets

(11) Veröffentlichungsnummer: **0 050 162**
**B1**

# EUROPÄISCHE PATENTSCHRIFT

(45) Veröffentlichungstag der Patentschrift:
09.04.86

(51) Int. Cl.⁴: **F 16 L 1/04**

(21) Anmeldenummer: 80106330.6

(22) Anmeldetag: 17.10.80

(54) Verfahren zum Verlegen von Rohrleitungen in Gewässern.

(43) Veröffentlichungstag der Anmeldung:
28.04.82 Patentblatt 82/17

(45) Bekanntmachung des Hinweises auf die Patenterteilung:
09.04.86 Patentblatt 86/15

(84) Benannte Vertragsstaaten:
AT DE

(56) Entgegenhaltungen:
GB - A - 1 418 535
GB - A - 1 494 204
US - A - 3 583 169
US - A - 3 747 356
US - A - 3 756 034
US - A - 3 890 693
US - A - 3 977 201

(73) Patentinhaber: Zellinger, Wolfgang, Dipl.Ing.,
Christian-Wildner Strasse 34, D-8500 Nürnberg (DE)

(72) Erfinder: Zellinger, Wolfgang, Dipl.Ing.,
Christian-Wildner Strasse 34, D-8500 Nürnberg (DE)

(74) Vertreter: Göbel, Matthias, Dipl.-Ing., Pruppacher
Hauptstrasse 5-7, D-8501 Pyrbaum-Pruppach (DE)

LIBER, STOCKHOLM 1986

## Beschreibung

Die Erfindung betrifft ein Verfahren zum Verlegen von Rohrleitungen in Gewässern, bei drm die Rohrleitungen im Bereich der Wasseroberfläche ausgerichtet und durch Fluten von Rohrleitungsabschnitten unter Bildung von Übergangskurven abgesenkt werden, wobei die Sinkgeschwindigkeit der Rohrleitung durch Leichterungsänderungen gesteuert und der absinkende Teil der Rohrleitung in Schwebe gehalten werden, einen sich an der Rohrleitungsinnenwandung abstützenden Innenkörper aufnehmen, der zum Absenken der Rohrleitung in dieser längsbewegt wird.

Nach bekannten Verlegeverfahren (US-A-3756034, US-A-3583169) für Rohrleitungen finden Innenkörper Anwendung, die zwischen einem Zug- und/oder Halteseil eingespannt sind und durch Nachführen der Seile mechanisch in der Rohrleitung längsbewegbar sind. Die Seile ergeben einen großen Bauaufwand und sind schwierig zu handhaben. Außerdem erfordern die bekannten Verlegeverfahren ein Verlegeschiff während der Rohrverlegung. Es ist andererseits zur Verhinderung von Verbeulungen an der Rohrleitung (GB-A-1418535) auch bekannt, in der Rohrleitung einen über ein kurzes Teilstück sich erstreckenden und durch Druckwasser verschieblichen Kolben vorzusehen. Dieser Kolben eignet sich jedoch nicht zur Beeinflussung der Absenkvorgänge, bzw. zur Bildung von Übergangskurven.

Die Erfindung hat zur Aufgabe, Verfahrensschritte zu schaffen, die den Verlegevorgang vereinfachen und diesem ohne Verlegeschiff auskommen. Erfindungsgemäß ist hierzu vorgesehen, daß sich der Innenkörper frei verschieblich im absinkenden Rohrleitungsteil und den Übergangskurven erstreckt und der absinkende Rohrleitungsteil und die Übergangskurven mindestens teilweise geflutet und im restlichen Teil desselben ein konstanter Luftdruck eingestellt und beim Ablaufen der Rohrleitung durch Einpumpen von Druckwasser in den abgesenkten Teil der Innenkörper in der Rohrleitung selbsttätig längsbewegt wird. Auf diese Weise ist die Möglichkeit gegeben, eine frei schwimmende Rohrleitung zum Einsatz zu bringen und mittels eines frei verschieblichen Innenkörpers durch Zusammenwirken von Druckwasser und Luftdruck in der Rohrleitung die Verlegevorgänge durchzuführen. Nach weiterem verfahren ist der Innenkörper mit einer Dichtung in der Rohrleitung dicht geführt und durch Einbringen von Druckwasser oder Druckluft hinter der Dichtung einfach und sicher längsbewegbar. Es versteht sich, daß dabei der absinkende Rohrleitungsteil und die Übergangskurven beliebig entweder mit Wasser gefüllt oder frei von Wasser sein können und der Innenkörper durch entsprechende Ausgestaltung als Auftriebkörper oder Absenkgewicht zur Einhaltung und Unterstützung des Schwebezustands der Rohrleitung nutzbar ist.

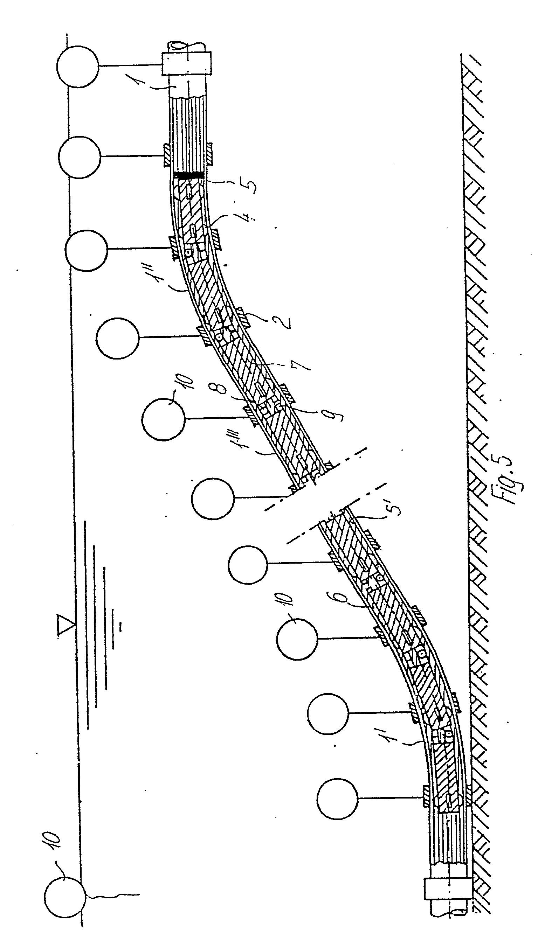

Schließlich sehen die Verfahrensschritte zur Unterstützung des Schwebezustandsaußen an der Rohrleitung angreifende Schwimmer vor und daß durch nacheinander Abttennen der Schwimmer am unteren Rohrleitungsteil und vermittels Druckwasser hinter einer am oberen oder unteren Ende des Innenkörpers angeordneten Dichtung, der Innenkörper in der Rohrleitung längsbewegt wird (Fig. 5, 6, 8). Es besteht aber auch die Möglichkeit, an der Rohrleitung außen Schwimmer angreifen zu lassen und den Innenkörper als Auftriebskörper auszubilden, so daß durch nacheinander Abtrennen von Schwimmern am oberen Rohrleitungsteil und Einbringen von Druckwasser in der Rohrleitung der Innenkörper in der Rohrleitung längsbewegt wird.

Darüber hinaus sieht das Verfahren bei an der Rohrleitung außen angreifenden Schwimmern auch vor, den Innenkörper als Absenkgewicht auszubilden, in einem wasserfreien absinkenden Teil und den Übergangskurven der Rohrleitung unterzubringen, und den Innenkörper durch nacheinander Abtrennen der Schwimmer am unteren Rohrleitungsende und Einbringen von Druckluft hinter der am vorderen Ende des Innenkörpers angeordneten Dichtung in der Rohrleitung längszubewegen. Die Rohrleitung bleibt hierbei innen wasserfrei und ist, z. B. als Gasrohrleitung geeignet.

Letztlich sieht die Erfindung eine Vorrichtung zur Durchfuhrung des Verfahrens dahingehend vor, daß der Innenkörper durch eine Anzahl miteinander verbundene Abschnitte gebildet ist, die wiederum durch Kufen, Rollen od. dgl. an der Innenwandung der Rohrleitung abgestützt und als Auftriebskörper oder Absenkgewichte ausgebildet sind. Zweckmäßig sind die Innenkörperabschnitte durch Gelenke abschwenkbar miteinander verbunden und die Abschwenkungen etwa zur sicheren Begrenzung von Krümmungsradien der Ubergangskurven durch fest oder einstellbar fest an den Innenkörpern angeordneten Anschlägen od. dgl. begrenzbar. Es besteht aber auch die Möglichkeit, den Innenkörper durch einen einstückigen Strangabschnitt aus einem flexiblen oder elastisch nachgiebigen Werkstoff zu bilden und als Auftriebskörper oder Absenkgewicht vorzusehen. Es liegt im Rahmen der Erfindung, daß mittels der Verfahrensschritte durch Umkehrung der Bewegungseinrichtung des Innenkörpers abgesenkte Rohrleitungen, z. B. zu Reparaturzwecken oder Lagekontrollen aufgeschwämmt werden können.

Das Verfahren wird nachfolgend anhand von in der Zeichnung dargestellten Ausführungsbeispielen näher erläutert. Hierin zeigen:

Fig. 1 eine Rohrleitung mit einem einstückigen Innenkörper und am unteren Ende desselben befindlichen Dichtung,

Fig. 2 eine Rohrleitung mit einem einstückigen Innenkörper und am oberen Ende desselben angeordneten Dichtung,

Fig. 3 eine Rohrleitung mit einem durch als Auftriebskörper dienende Abschnitte gebildeten Innenkörper,

Fig. 4 eine Rohrleitung mit einem durch eine Anzahl als Absenkgewichte dienende Abschnitte gebildeten Innenkörper,

Fig. 5 eine Rohrleitung mit einem aus Abschnitten gebildeten und als Absenkgewichte dienenden Innenkörper, mit aussen an der Rohrleitung angreifenden Schwimmern,

Fig. 6 eine Rohrleitung mit Schwimmern und einem durch Abschnitte gebildeten Innenkörper,

Fig. 7 eine Rohrleitung mit Schwimmern und einem durch Abschnitte gebildeten Innenkörper, gemäß einer weiteren Ausführungsform,

Fig. 8 eine Rohrleitung mit Schwimmern und einem durch Abschnitte gebildeten Innenkörper, entsprechend einer anderen Ausführungsform und

Fig, 9 eine Rohrleitung mit einem durch Abschnitte gebildeten Innenkörper, entsprechend einer anderweitigen Ausgestaltung.

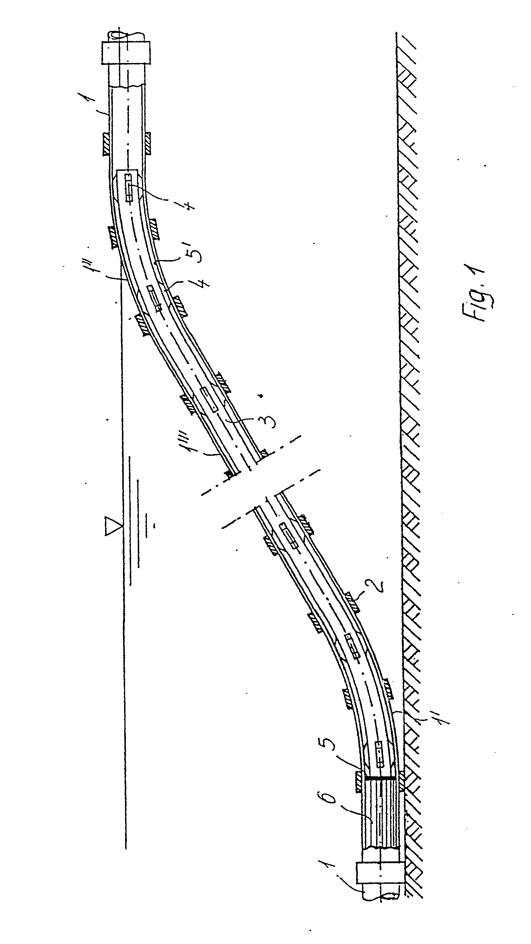

In Fig. 1 ist mit 1 die zu verlegende Rohrleitung bezeichnet. Die Rohrleitung 1 ist aus einem Kunststoff hergestellt und außen in vorbestimmten Abständen mit fest aufgebrachten Ballastkörpern 2 versehen, die die Auftriebskraft der Rohrleitung teilweise eliminieren. Erfindungsgemäß ist in die Rohrleitung 1 im Bereich der Übergangskurven 1' und 1'' sowie dem absinkenden Teil 1'' ein Innenkörper 3 eingeschoben, der aus einem biegesteifen, z.B. flexiblen Werkstoff wie Kunststoff oder Gummiwerkstoff besteht. Beim Ausführungsbeispiel der Fig, 1 ist der Innenkörper 3 durch einen einstückigen Strangabschnitt gebildet, der sich mittels Kufen 4 im Abstand an der Innenwandung 5 der Rohrleitung 1 abstützt. An seinem rückwärtigen Ende weist der Innenkörper eine Dichtung 5 auf. Die Biegestreife des Innenkörpers 3 ist so gewählt, daß die Übergangskurven 1' und 1'' der Rohrleitung durch Abstützen des Innenkörpers vorbestimmte Krümmungsradien nicht unterschreiten. Durch Längsbewegen des Innenkörpers 3 erfolgt das Absenken der Rohrleitung 1, wobei durch mehr oder weniger schnelles Längsbewegen des Innenkörpers 3 die Absenkgeschwindigkeit steuerbar ist. Die Längsbewegungen sind durch Einbringen von Druckwasser 6 hinter der Dichtung 5 erreichbar. Es besteht die Möglichkeit den Absenkvorgang durch Anhalten des Innenkörpers 3 zu unterbrechen, wobei keinerlei Druckstöße auf die im Schwebezustand befindliche Rohrleitung 1 zu erwarten sind.

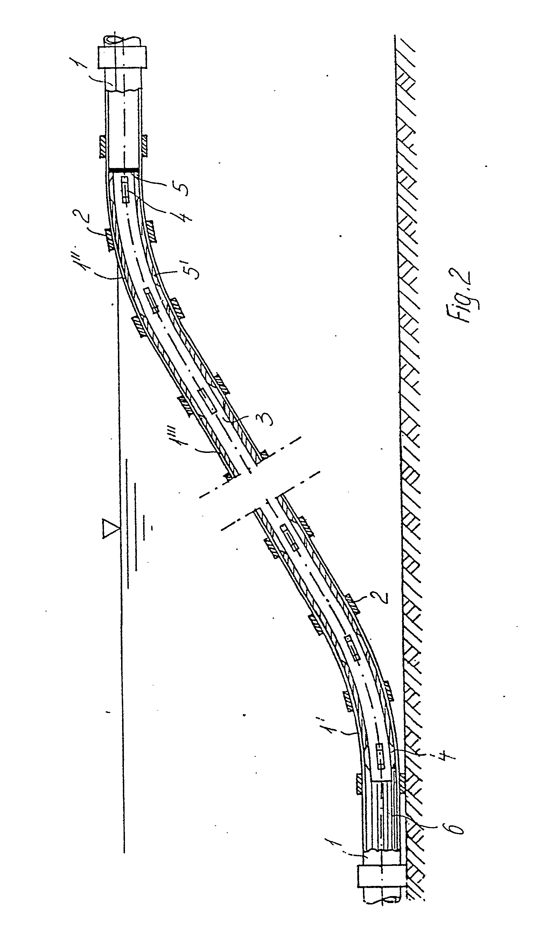

Beim Ausführungsbeispiel der Fig. 2 ist bei an sich gleicher Ausbildung der Rohrleitung 1 und des Innenkörpers 3 die Dichtung 5 am vorderen Ende des Innenkörpers 3 angeordnet. Dies führt dazu, daß sich Druckwasser 6 auch in den Übergangskurven 1' und 1'' sowie dem Absinkenden Teil 1'' befindet. Das Gewicht der Rohrleitung 1, der Ballastkörper 2 und des Innenkörpers 3 ist so aufeinander abgestimmt, daß der Schwebezustand im Bereich des absinkenden Teils und den Übergangskurven vorliegt. Auch bei diesem Ausführungsbeispiel wird durch Längsbewegen des Innenkörpers 3 der Absenkvorgang der Rohrleitung 1 vorgenommen.

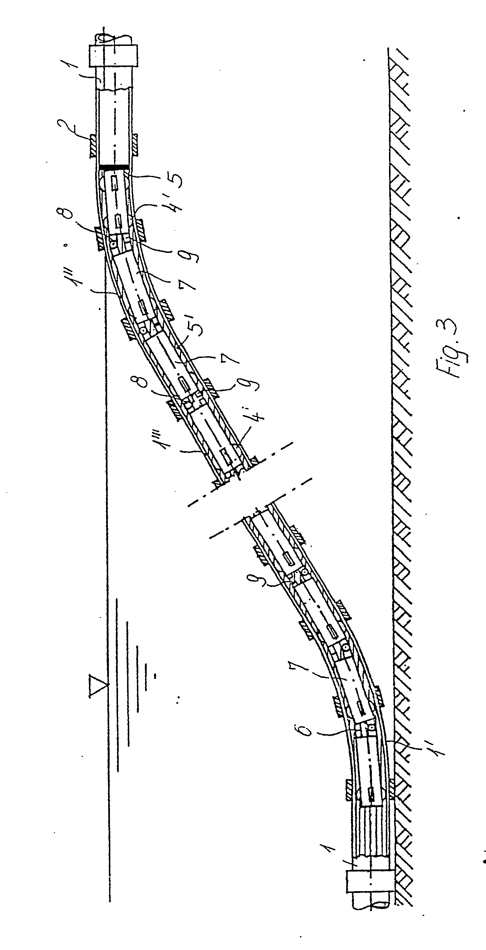

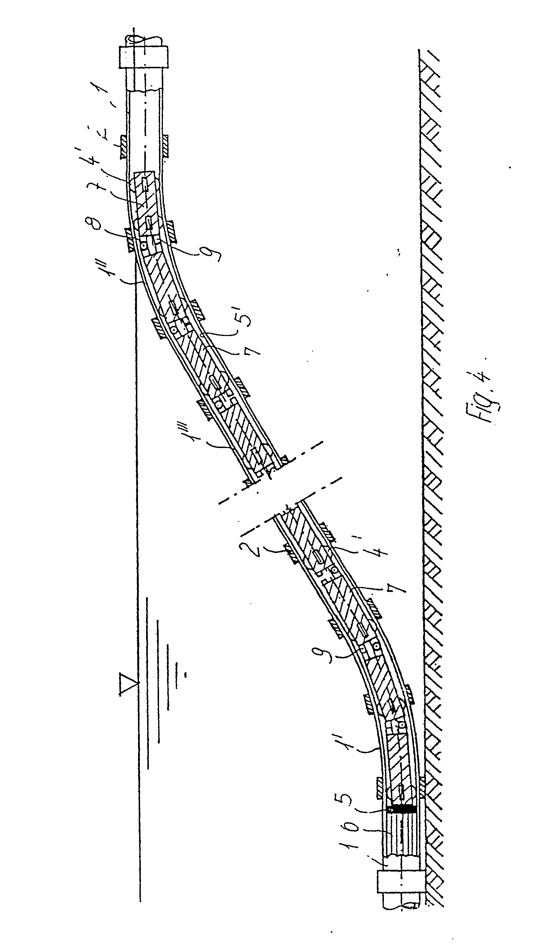

In der Rohrleitung 1 der Fig. 3 und 4 ist ein durch Abschnitte 7 zusammengesetzter Innenkörper eingeschoben. Die Abschnitte 7 sind durch Gelenke 8 miteinander verbunden. Außerdem weisen die Abschnitte 7 Anschläge 9 auf, die bei Überschreiten vorbestimmter Abschwenkungen der Abschnitte 7 durch Abstützen aufeinander die Abschwenkung der Abschnitte begrenzen, um so zur Vermeidung von zerstörenden Spannungen und Verformungen die Krümmungsradien der Rohrleitung 1 im Bereich der Übergangskurven 1', 1'' in vorbestimmten Grenzen zu halten. Zweckmäßig sind die Gelenke 8 in den Übergangskurven 1' und 1'' zur Mittelachse nach außen versetzt, während die Anschläge 9 nach innen versetzt ausgebildet sind. Die Dichtung 5 ist entweder am vorderen Ende der Abschnitte 7 (Fig. 3) oder am rückwärtigen Ende der Abschnitte 7 (Fig. 4) angeordnet, wodurch der absinkende Teil 1'' und die Übergangskurven 1' und 1'' beim Absenkvorgang entweder mit Wasser gefüllt oder leer sind. Die Abschnitte 7 wirken beim Ausführungsbeispiel der Fig. 3 als Auftriebskörper und beim Ausführungsbeispiel der Fig. 4 als Abtriebsgewichte und unterstützen so den Schwebezustand der Rohrleitung. Die Abschnitte 7 sind durch Rollen 4' an der Innenwandung der Rohrleitung längsbeweglich abgestützt.

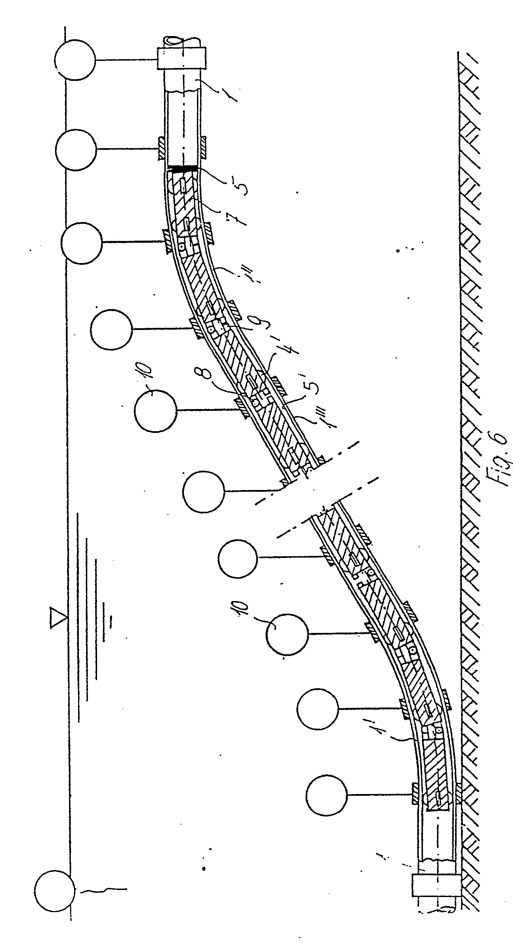

In Fig. 6 sorgen an der Rohrleitung 1 im Bereich des absinkenden Teils 1'' und den Übergangskurven 1' und 1'' angreifende Zusatzschwimmer 10 für die Einhaltung des Schwebezustands. Der Innenkörper ist durch mittels Gelenken 8 verbundene Abschnitte 7 gebildet, die wiederum Anschläge 9 aufweisen. Die Dichtung 5 ist am vorderen Ende des Innenkörpers angeordnet und der Innenkörper durch Einbringen von Druckluft in den abgelegten Rohrleitungsteil und den Teilen 1', 1'', 1 durch Längsbewegungen des Innenkörpers absenkbar. Die Rohrleitung 1 bleibt bei der Verlegung frei von Wasser und ist insbesondere als Gasrohrleitung geeignet.

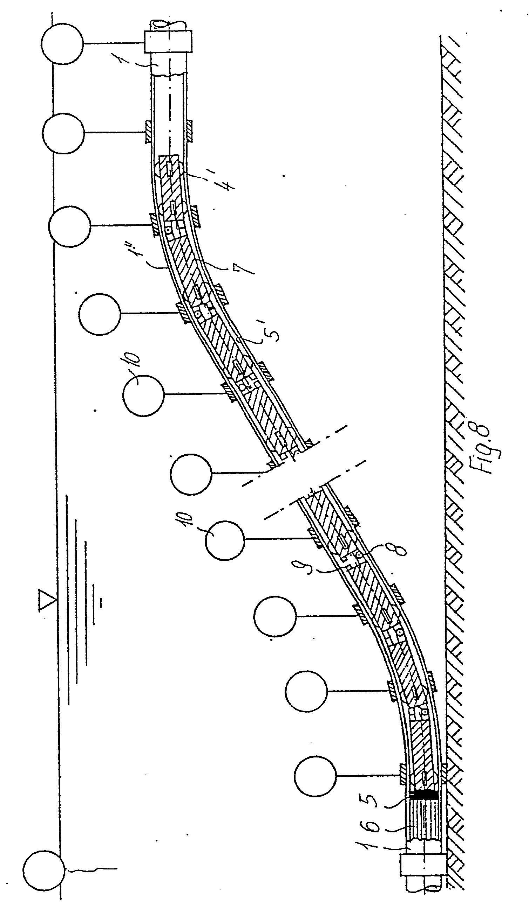

Bei den Ausführungsbeispielen der Fig. 5 und 8 ist die Rohrleitung 1 durch Zusatzschwimmer 10 getragen und die als Innenkörper dienenden Abschnitte 7 als Absenkgewichte ausgebildet. Die Dichtung 5 ist entweder am vorderen Ende des Innenkörpers (Fig. 6) oder rückwärtigen Ende (Fig. 8) angebracht, so daß bei Zuführung von Druckwasser und den Längsbewegungen des Innenkörpers der absinkende Teil 1'' und die Übergangskurven 1' und 1'' mit Wasser gefüllt bzw. leer sind.

Durch nacheinander Lösen der Zusatzschwimmer am unteren Ende und Einführen von Druckwasser erfolgen die Längsbewegungen des Innenkörpers und der Absenkvorgang der Rohrleitung.

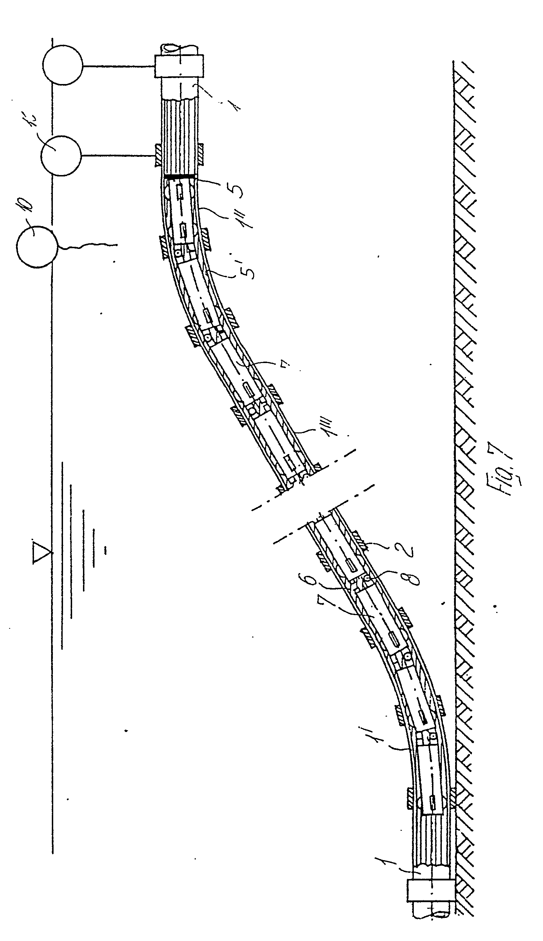

Beim Ausführungsbeispiel der Fig. 7 sind die Abschnitte 7 des Innenkörpers als Auftriebskörper gestaltet und die Dichtung 5 am vorderen Ende der Abschnitte 7 angeordnet. Durch Abtrennen der an der Rohrleitung angreifenden Zusatzschwimmer 10 am oberen Ende der Rohrleitung 1 und Einbringen von Druckwasser hinter der Dichtung 5 erfolgen Längsbewegungen des Innenkörpers und Absenken der Rohrleitung 1.

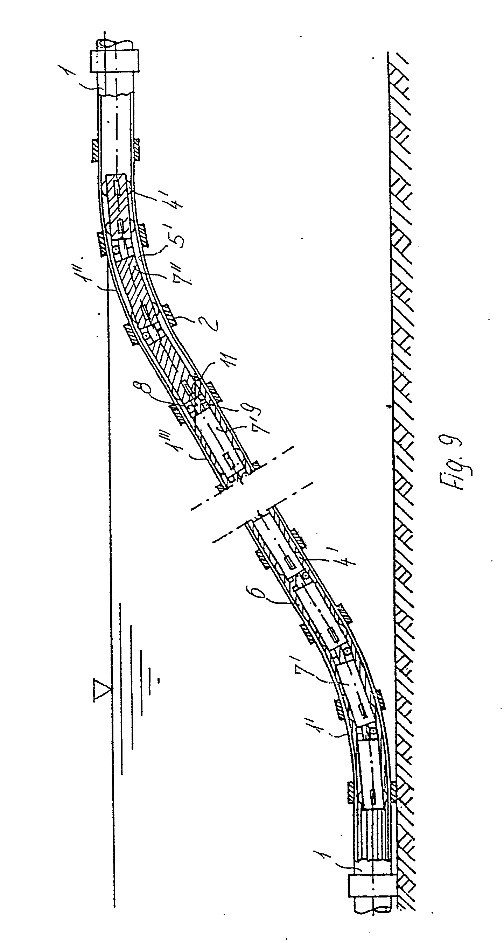

Beim Ausführungsbeispiel der Fig. 9 ist der Innenkörper durch Abschnitte 7 gebildet, von denen Abschnitte 7' als Auftriebskörper und Abschnitte 7'' als Absenkgewichte dienen Der Innenkörper ist ohne Dichtung zum Einsatz gebracht, während im absinkenden Teil 1'' über eine Teillänge und in der Übergangskurve 1' Druckwasser bis zu einem Spiegel 11 eingebracht ist, ist im Rest des absinkenden Teils 1'' und in der Übergangskurve 1'' ein konstanter Luftdruck aufgebaut. Durch Ablaufen der Rohrleitung 1 und gleichzeitigem Einbringen von Druckwasser erfolgt das Absenken der Rohrleitung 1 unter Beibehaltung der Druckwerte.

**Patentansprüche**

1. Verfahren zum Verlegen von Rohrleitungen (1) in Gewässern, bei dem die Rohrleitungen (1) im Bereich der Wasseroberfläche ausgerichtet und durch Fluten von Rohrleitungsabschnitten unter Bildung von Übergangskurven (1', 1'') abgesenkt werden, wobei die Sinkgeschwindigkeit der Rohrleitung (1) durch Leichterungsänderungen gesteuert und der absinkende Teil (1'') der Rohrleitung (1) in Schwebe gehalten werden, einen sich an der Rohrleitungsinnenwandung (5') abstützenden Innenkörper (3) aufnehmen, der zum Absenken der Rohrleitung (1) in dieser längsbewegt wird, dadurch gekennzeichnet, daß sich der Innenkörper (3) frei verschieblich im absinkenden Rohrleitungsteil (1'') und den Übergangskurven (1', 1'') erstreckt und der absinkende Rohrleitungsteil (1'') und die Übergangskurven (1', 1'') mindestens teilweise geflutet und im restlichen Teil desselben ein konstanter Luftdruck eingestellt und beim Ablaufen der Rohrleitung (1) durch Einpumpen von Druckwasser (6) in den abgesenkten Teil der Innenkörper (3) in der Rohrleitung (1) selbsttätig längsbewegt wird (Fig. 9).

2. Verfahren nach Anspruch 1, dadurch gekennzeichnet, daß der Innenkörper (3) mit einer Dichtung (5) in der Rohrleitung (1) dicht geführt und mittels Druckwasser (6) oder Druckluft hinter der Dichtung (5) längsbewegt wird (Fig. 1 bis 4).

3. Verfahren nach Anspruch 1, dadurch gekennzeichnet, daß die Rohrleitung (1) schwimmend im Bereich der Wasser-oberflßche geführt wird.

4. Verfahren nach Anspruch 1 und 2, dadurch gekennzeichnet, daD an der Rohrleitung (1) außen Schwimmer (10) angreifen und daß durch nacheinander Abtrennen der Schwimmer (10) am unteren Rohrleitungsteil und vermittels Druckwasser (6) hinter der am oberen oder unteren Ende des Innenkörpers angeordneten Dichtung (5) der Innenkörper (3) in der Rohrleitung längsbewegt wird (Fig. 5, 6, 8).

5. Verfahren nach Anspruch 1 und 2, dadurch gekennzeichnet, daß an der Rohrleitung (I) außen Schwimmer (10) angreifen und der Innenkörper (3) als Auftriebskörper ausgebildet ist und daß durch nacheinander Abtrennen von Schwimmern (10) am oberen Rohrleitungsteil und vermittels Druckwasser (6) der Innenkörper (3) in der Rohrleitung (1) längsbewegt wird (Fig. 7).

6. Verfahren nach Anspruch 1 und 2, dadurch gekennzeichnet, daß an der Rohrleitung (I) außen Schwimmer (10) angreifen und der Innenkörper (3) als Absenkgewicht ausgebildet und in einem wasserfreien absinkenden Teil und Übergangskurven (1', 1'') der Rohrleitung (1) eingebracht ist und daß durch nacheinander Abtrennen von Schwimmern (10) am oberen Rohrleitungsende und Einbringen von Druckluft hinter der am vorderen Ende des Innenkörpers (3) angeordneten Dichtung (5) der Innenkörper (3) in der Rohrleitung (1) längsbewegt wird (Fig. 6).

7. Vorrichtung zur Durchführung des Verfahrens nach Anspruch 1 bis 6, dadurch gekennzeichnet, daß der Innenkörper (3) durch eine Anzahl miteinander verbundene Innenkörperabschnitte (7) gebildet ist, die durch Kufen, Rollen (4') od. dgl. an der Innenwandung der Rohrleitung (1) abgestützt und als Auftriebskörper oder Absenkgewichte ausgebildet sind.

8. Vorrichtung nach Anspruch 7, dadurch gekennzeichnet, daß die Innenkörperabschnitte (7) durch Gelenke (8) abschwenkbar verbunden und die Abschwenkungen der Innenkörperabschnitte durch fest oder einstellbar fest an diesen angeordnete Anschläge (9) od. dgl. begrenzbar sind.

9. Vorrichtung zur Durchführung des Verfahrens nach Anspruch 1 bis 6, dadurch gekennzeichnet, daß der Innenkörper (3) durch einen einstückigen Strangabschnitt aus einem flexiblen oder elastisch nachgiebigen Werkstoff gebildet ist und als Auftriebskörper oder Absenkgewicht ausgebildet ist.

10. Vorrichtung nach Anspruch 9, dadurch gekennzeichnet, daß der Strangabschnitt (3) mittels Gleitkufen (4), Gleitrollen od. dgl. auf der Innenwandung der Rohrleitung (1) längsbeweglich abgestützt ist.

**Claims**

1. A process for laying underwater pipelines (1) by which the pipelines (1) are aligned in the area of the water surface and submerged by flooding of pipeline sections in conjunction with the forming of transitional curves (1', 1''), the speed at which the pipeline (1) submerges being controlled by variations in its lightness and with which the submerging section (1'') of the pipeline (1) is held in suspense and accommodates an inner body (3) supported on the inner wall of the pipeline body (5') which moves horizontally therein to cause the pipeline (1) to submerge, wherein the inner body (3) displaces freely within the submerging section of the pipeline (1'') and extends the transitional curves (1', 1'') with the submerging section of the pipeline (1'') and the transitional curves (1', 1'') being flooded at least in part with constant air pressure being achieved in the remaining section thereof and as the pipeline (1) runs out the inner body (3) is moved automatically in longitudinal plane within the pipeline (1) by pressurised water (6) being pumped into the submerged section (Fig. 9).

2. Process as claimed in Claim 1, wherein the inner body (3) is carried in a tight seal (5) within the pipeline (1) and is moved longitudinally by pressurised water (6) or compressed air behind the seal (5) (Figs. 1 to 4).

3. Process as claimed in Claim 1, wherein the pipeline (1) is suspended to float within the area of the water surface.

4. Process as claimed in Claims 1 and 2, wherein floats (10) are attached to the exterior of the pipeline (1) and the inner body (3) is moved longitudinally within the pipeline by consecutive separation of the floats (10) on the lower section of the pipeline and with the aid of pressurised water (6) behind the seal (5) disposed at the upper or lower end of the inner body (Figs. 5, 6, 8).

5. Process as claimed in Claims 1 and 2, wherein floats (16) attach to the pipeline (1) exterior and the inner body (3) is in the form of a bouyancy body and whereby the inner bohy (3) is moved longitudinally within the pipeline (1) through consecutive separation of floats (16) on the upper part of the pipeline and with the aid of pressurised water (6) (Fig. 7).

6. Process as claimed in Claims 1 and 2, wherein floats (10) attach externally to pipeline (1) and the internal bohy (3) is in the form of a lowering weight and is introduced into a water-free submerging section and transitional curves (1', 1'') in the pipeline (1) and the internal body (3) is moved longitudinally within the pipeline (1) through consecutive separation of floats (10) at the upper end of the pipeline and introduction of compressed air behind the seal (5) disposed at the front end of the internal body (3). (Fig. 6).

7. Device for implementation of the process as claimed in Claims 1 to 6, whereby the internal body (3) is formed by a number of interconnected internal body sections (7) which are supported by skids, rollers (4') or similar on the inside wall of the pipeline (1) and are in the form of bouyancy bodies or lowering weights.

8. Device as claimed in Claim 7, whereby the internal body sections (7) are pivotally interconnected by joints (8) and the pivotal motions of the internal body sections are limited by fixed or adjustable limit stops (9) or similar disposed permanently thereon.

9. Device for implementation of the process as claimed in Claims 1 to 6, whereby the internal body (3) is in the form of a one-piece extruded section in a flexible or resilient substance and acts as a bouyancy body or lowering weight.

10. Device as claimed in Claim 9, whereby the extruded section (3) is supported in its longitudinal motion by skids (4), slide rollers or similar on the inside wall of the pipeline (1).

**Revendications**

1. Procédé pour la pose de tuyauteries (1) immergées, consistant à orienter la tuyauterie au niveau de la surface de l'eau et à la faire descendre - formant coudages (1', 1,,)-en remplissant d'eau des sections de tuyauterie, la vitesse de descente de la tuyauterie étant contrôlée par variation de l'allégement et la partie descendante (1'') de la tuyauterie étant maintenue en suspens; à placer dans la tuyauterie un corps intérieur (3) prenant appui sur la paroi interne de la tuyauterie (5') et se déplaçant longitudinalement à l'interieur de la tuyauterie (1) pour l'immersion de cette dernière. Ce procédé est caractérisé par le fait que le corps intérieur (3) s'étend et se déplace librement dans la partie descendante de la tuyauterie (1'') ainsi que dans les parties coudées, et que la partie de tuyauterie descendante (1'') et les parties coudées (1', 1'') sont, au moins partiellement, remplies d'eau, une pression d'air constante étant réglée dans la partie restante et que, lors de la mise à l'eau de la tuyauterie (1) l'injection d'eau sous pression (6) dans la partie immergée provoque automatiquement le déplacement longitudinal du corpsintérieur (3) dans la tuyauterie (fig. 9)

2. Procédé suivant la spécification n° 1, caractérisé par le fait que le corps intérieur (3) est guidé dans la tuyauterie (1) de manière étanche, au moyen d'une garniture d'étanchéité (5) et qu'il se déplace longitudinalement derrière la garniture d'étanchéité (5) par l'action de l'eau sous pression (6) ou de l'air comprimé (fig. 1 à 4).

3. Procédé suivant la spécification n° 1, caractérisé par le fait que la tuyauterie (1) est guidée flottant au niveau de la surface de l'eau

4. Procédé suivant les specifications n° 1 et 2, caractérisé par le fait que des flotteurs (10) sont fixés sur la face externe de la tuyauterie (1) et que le détachement successif des flotteurs (10) situés sur la partie inférieure de la tuyauterie et l'action de l'eau entrant sous pression (6) derrière la garniture d'étanchéité (5) disposée aux extrémités inférieure et extérieure du corps intérieur (3) provoquent le déplacement longitudinal du corps intérieur dans la tuyauterie (fig. 5, 6, 8).

5. Procédé suivant les spécifications n° 1 et 2, caractérisé par le fait que des flotteurs (10) sont fixés sur la face externe de la tuyauterie (1), que le corps intérieur (3) est réalisé sous forme de flotteur et que le détachement successif de flotteurs (10) situés sur la partie supérieure de la tuyauterie et l'action de l'eau sous pression (6) provoquent le deplacement longitudinal du corps intérieur (3) dans la tuyauterie (1) (fig. 7).

6. Procédé suivant les spécifications n° 1 et 2, caractérisé par le fait que des flotteurs (10) sont fixés sur la face externe de la tuyauterie (1), que le corps intérieur (3) est réalisé sous forme de lest et placé dans une partie de tuyauterie (1) sans eau, composée d'une section descendante et des coudes (1', 1''), et que le détachement successif de flotteurs (10) situés à l'extrémité supérieure de la tuyauterie (1) et l'action de l'air comprimé entrant derrière la garniture d'étanchéité (5) disposée à l'extrémité avant du corps intérieur (3) provoquent le déplacement longitudinal du corps intérieur (3) dans la tuyauterie (1) (fig. 6).

7. Dispositif permettant la réalisation du procédé défini par les spécifications n° 1 à 6, caractérisé par le fait que le corps intérieur (3) est constitué par un certain nombre d'éléments (7) reliés entre eux et qui prennent appui sur la paroi interne de la tuyauterie (1) par l'intermédiaire de patins, galets (4') ou similaires et qui sont réalisés soit sous forme de flotteur, soit sous forme de lest.

8. Dispositif suivant la spécification n° 7, caractérisé par le fait que les éléments formant le corps intérieur (7) sont reliés entre eux par des articulations (8) qui en permettent le pivotement, et que les pivotements des éléments de corps intérieur sont limitables par des butées fixes ou réglables et verrouillables (9) ou similaires.

9. Dispositif permettant la réalisation du procédé défini par les spécifications n° 1 à 6, caractérisé par le fait que le corps intérieur (3) est constitué par un élément unique, continu, réalisé en un matériau flexible ou élastique/souple et formant flotteur ou lest.

10. Dispositif suivant la spécification n° 9, caractérisé par le fait que l'élément continu (3) se déplace longitudinalement dans la tuyauterie au moyen de patins (4), galets ou similaires, prenant appui sur la paroi interne de la tuyauterie (1).

Fig.1

Fig.2

Fig. 3

Fig. 4

Fig. 5

Fig. 6

Fig.7

Fig.8

Fig. 9